# FASCICULE DE BREVET EUROPEEN

(11) **EP 0 637 768 B1**
(45) Date de publication et mention de la délivrance du brevet: **06.10.1999**
(21) Numéro de dépôt: 94401773.0
(22) Date de dépôt: 02.08.1994
(51) Int. Cl.: G02B 6/44

(54) **Fibre optique,câble à fibres optiques et procédé de réalisation associé**
Optischer Faser,optisches Kabel und Herstellungsverfahren desselben
Optical fibre,fibre optic cable and manufacturing process related thereto

(30) Priorité: 04.08.1993 FR 9309615
(43) Date de publication de la demande: 08.02.1995
(73) Titulaire: ALCATEL, 75008 Paris (FR)
(72) Inventeur: Carratt, Michel, F-78800 Houilles (FR); De Vecchis, Michel, F-95490 Vaureal (FR)
(74) Mandataire: Buffière, Michelle

(56) Documents cités:
- EP-A- 0 245 752
- EP-A- 0 402 895
- EP-A- 0 432 931
- GB-A- 2 109 581
- PATENT ABSTRACTS OF JAPAN vol. 10, no. 294 (P-504) 7 Octobre 1986 & JP-A-61 113 007 (NIPPON TELEGR & TELEPH CORP) 30 Mai 1986
- PATENT ABSTRACTS OF JAPAN vol. 14, no. 214 (P-1044) 7 Mai 1990 & JP-A-02 047 613 (FUJIKURA LTD)
- IEEE JOURNAL OF QUANTUM ELECTRONICS, vol.28, no.6, 6 Juin 1992, NEW YORK US pages 1429 - 1434 LIANG AN-HUI 'microbending losses for weakly guiding single-mode fibers'

## Description

La présente invention concerne une fibre optique, ainsi qu'un câble comportant de telles fibres optiques, notamment pour un réseau de distribution, ainsi qu'un procédé de réalisation associé.

Les câbles à fibres optiques permettent la transmission d'informations dans d'excellentes conditions et sur des distances toujours plus grandes.

Jusqu'à présent, leur utilisation a été principalement réservée aux transmissions à grande distance, dans des réseaux interurbains et intercentraux. Actuellement, on s'oriente vers une utilisation dans des réseaux de distribution, jusqu'au sein même dès immeubles et sites d'habitation, notamment dans le cadre du développement des réseaux numériques à intégration de service.

Or les structures traditionnelles de câbles à fibres optiques sont adaptées aux réseaux interurbains et intercentraux et conviennent plutôt à des nombres de fibres faibles ou moyens, alors qu'un câble pour réseau de distribution à fibres optiques doit comprendre un nombre de fibres optiques beaucoup plus élevé que dans le cas d'une transmission longue distance, puisqu'il est nécessaire de prendre en compte les multiples connexions terminales des abonnés (le nombre de fibres optiques dans un tel câble peut varier en pratique entre quelques centaines et quelques milliers), et doit être peu encombrant afin d'être installé dans des conduites de très petit diamètre.

Les câbles à fibres optiques actuellement utilisés pour les transmissions à grandes distances sont de deux types.

Un premier type de câbles à fibres optiques est à structure dite alvéolée ou libre, c'est-à-dire qu'il comporte un ou plusieurs éléments sous forme de jonc rainuré ou de tube dans lequel sont logées les fibres optiques. Afin de diminuer les courbures et les microcourbures subies par les fibres optiques et qui sont à l'origine de l'augmentation de leur atténuation, les fibres optiques sont laissées libres et avec une certaine surlongueur dans les rainures ou dans le tube.

On comprend bien qu'une telle structure exige un rapport très important entre la section du câble et la somme des sections des fibres optiques individuelles qui y sont insérées, afin de loger la surlongueur des fibres. Une telle structure est donc tout à fait inadaptée à l'utilisation dans un réseau de distribution, car la section des câbles serait alors prohibitive, compte tenu du nombre de fibres optiques très élevé que doit contenir un câble pour être utilisé dans un tel réseau.

Un deuxième type de câbles à fibres optiques est à structure dite en ruban, c'est-à-dire que les fibres optiques sont disposées parallèlement les unes aux autres et maintenues ensemble dans un revêtement protecteur de résine. Ce type de câbles est plus compact et moins encombrant, car l'utilisation de surlongueurs n'est pas nécessaire. Toutefois, la structure en ruban est plutôt adaptée à un raccordement global, ce qui peut poser des problèmes au niveau d'un réseau de distribution. En effet, dans un réseau de distribution, il faut pouvoir faire évoluer en permanence la topologie, ce qui nécessite un éclatement du ruban et est difficilement compatible avec les contraintes du raccordement global, trop peu flexible.

Ainsi, il ressort de l'observation des solutions techniques existantes en matière de câbles à fibres optiques que celles-ci sont inadaptées à une utilisation au sein d'un réseau de distribution.

Le but de la présente invention est de remédier à ces inconvénients en proposant une fibre optique, ainsi qu'un câble comportant de telles fibres optiques, qui réponde aux contraintes inhérentes à une utilisation dans un réseau de distribution, puisse être produit à faible coût, permette une facilité de raccordement et puisse comporter un nombre élevé de fibres.

L'invention propose à cet effet une fibre optique telle que définie à la revendication 1, ainsi qu'un câble à fibres optiques tel que défini à la revendication 8.

Ainsi, avec un câble selon l'invention, il est possible d'utiliser des procédures d'organisation des raccordements les plus proches possibles de celles qui ont fait et continuent de faire leurs preuves en distribution par câble électrique à fils de cuivre, c'est-à-dire de torsader les fibres optiques entre elles ou autour d'un élément central de renfort, ou bien de les disposer en long, notamment en structure serrée, ceci grâce à la diminution de la sensibilité des fibres optiques aux courbures et aux microcourbures.

En effet, on sait comme connues du document EP-A-402 895 que les courbures et les microcourbures entraînent pour les fibres optiques qui y sont soumises une diminution de leur durée de vie ainsi qu'une augmentation des pertes de transmission due à un accroissement de l'atténuation.

En dotant les fibres optiques d'un revêtement hermétique mince (qui n'augmente par conséquent pas son encombrement), on augmente leur durée de vie et l'on évite donc la première conséquence des courbures et microcourbures.

En choisissant un diamètre de champ de mode compris entre 7 et 9 µm vers 1550 nm, et une longueur d'onde de coupure de chacune des fibres optiques inférieure ou égale à 1,35 µm, on assure une meilleure transmission, c'est-à-dire que l'on diminue les pertes, et l'on évite donc la deuxième conséquence des courbures et microcourbures.

On a donc ainsi diminué la sensibilité des fibres optiques aux courbures et microcourbures, ce qui évite d'avoir à utiliser des surlongueurs et des structures libres. On peut ainsi utiliser les fibres optiques dans des structures du type de celles utilisées pour les câbles de distribution électriques, qui assurent une compacité importante comparée à celle des câbles à fibres optiques à structure libre, tout en permettant des raccordements aisés en comparaison des câbles à fibres optiques en rubans.

Grâce à l'invention, on diminue donc les effets des courbures et des microcourbures non pas en ayant recours à des structures de diamètre important ou à des structures en ruban, mais en agissant directement sur la fibre optique. La combinaison de la structure nouvelle de la fibre optique avec une structure de câble du type de celles utilisées en distribution électrique, autorisée par la résistance accrue de la fibre optique aux courbures et aux microcourbures, conduit à réaliser un câble particulièrement peu encombrant et adapté à une utilisation dans les réseaux de distribution, aussi bien que le sont les câbles électriques ayant la même structure.

Enfin, la réalisation d'un revêtement plastique autour de chaque fibre optique a pour effet d'une part de protéger le traitement de surface, et d'autre part, lorsque le revêtement est extrudé, de permettre une identification de la fibre ainsi revêtue, les combinaisons de couleurs disponibles étant plus élevées (comme pour un câble électrique) que pour la coloration d'un revêtement primaire de fibre sous forme de résine. On résout ainsi le problème de l'identification et du repérage de chaque fibre au sein d'un câble, qui est crucial dans les phases d'installation et de raccordement. Ce problème est d'ailleurs bien résolu dans le cas de transmissions filaires classiques, mais pour les câbles à fibres optiques connus antérieurement, le nombre de couleurs possibles pour le revêtement primaire de résine des fibres restait relativement limité.

On notera que l'extrusion du revêtement en matériau plastique est rendue possible sur la fibre optique moins sensible aux courbures et aux microcourbures.

Le choix d'un revêtement plastique mince permet également de limiter le niveau de courbures et de microcourbures appliquées à la fibre.

Suivant un autre aspect de l'invention, un procédé pour réaliser un câble à fibres optiques est caractérisé en ce qu'il comprend les étapes suivantes:
- réalisation de fibres optiques dont les paramètres optogéométriques sont sélectionnés de manière telle qu'elles présentent un diamètre de champ de mode compris entre 7 et 9 µm vers 1550 nm et une longueur d'onde de coupure inférieure ou égale à 1,35 µm,
- traitement de chaque fibre pour rendre celle-ci sensiblement hermétique,
- réalisation d'un revêtement plastique mince directement appliqué sur chaque fibre préalablement traitée, et coloré à des fins d'identification,
- assemblage des fibres ainsi traitées et revêtues.

Aux dessins annexés donnés à titre d'exemples non limitatifs :
- la figure 1 est une vue en perspective d'une fibre optique traitée selon l'invention,
- la figure 2 est une vue en perspective d'un assemblage de fibres selon l'invention, disposées en couches concentriques,
- la figure 3 est une vue en perspective d'un assemblage de fibres selon l'invention en faisceaux,
- la figure 4 est une vue en perspective d'une fibre multicoeurs pouvant être utilisée à la place de la fibre de la figure 1,
- la figure 5A illustre un assemblage de fibres suivant un mode d'assemblage SZ,
- la figure 5B illustre un assemblage de fibres suivant un mode d'assemblage à pas hélicoïdal,
- les figures 6 et 7 donnent deux exemples de profils d'indices pour des fibres utilisées dans un câble selon l'invention.

Dans toutes ces figures, les éléments communs portent les mêmes numéros de référence.

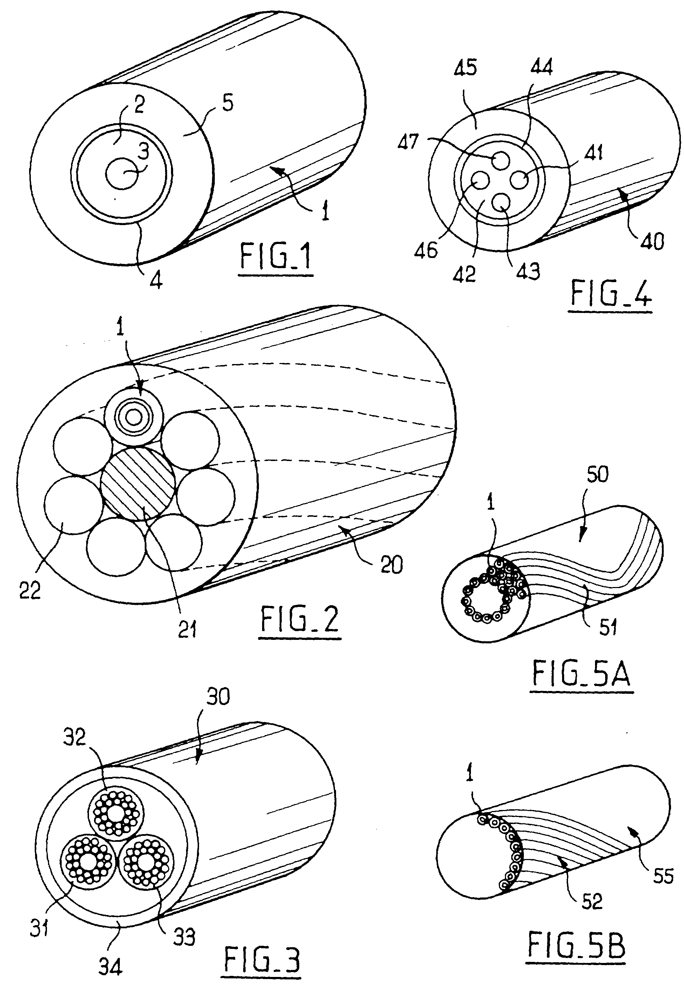

On va maintenant décrire un câble à fibres optiques selon l'invention, en référence aux figures 1 à 5B.

Un câble à fibres optiques selon l'invention peut présenter une combinaison de tout ou partie des caractéristiques suivantes:
- la fibre présente un diamètre de champ de mode réduit, dans la gamme d'environ 7 à 9 µm pour une longueur d'onde voisine de 1550 nm, pour résister aux courbures et aux microcourbures, ce qui correspond à un profil d'indice simple à réaliser, par exemple Δn = 6.10⁻³ à 8.10⁻³,
- un traitement est réalisé sur ou dans la couche externe de silice pour obtenir une durée de vie suffisante dans des conditions difficiles : c'est alors une fibre de type "hermétique",
- un revêtement plastique mince est directement appliqué sur la fibre ainsi constituée (par enduction ou par extrusion) et est coloré à des fins d'identification;
- un assemblage des fibres ainsi revêtues en faisceaux ou en couches concentriques à pas hélicoïdal ou "SZ" est réalisé, un tel assemblage présentant l'avantage de permettre des raccordements avec une configuration semblable à celle des câbles de distribution en cuivre,
- l'assemblage ci-dessus est protégé par une gaine extérieure en matériau plastique.

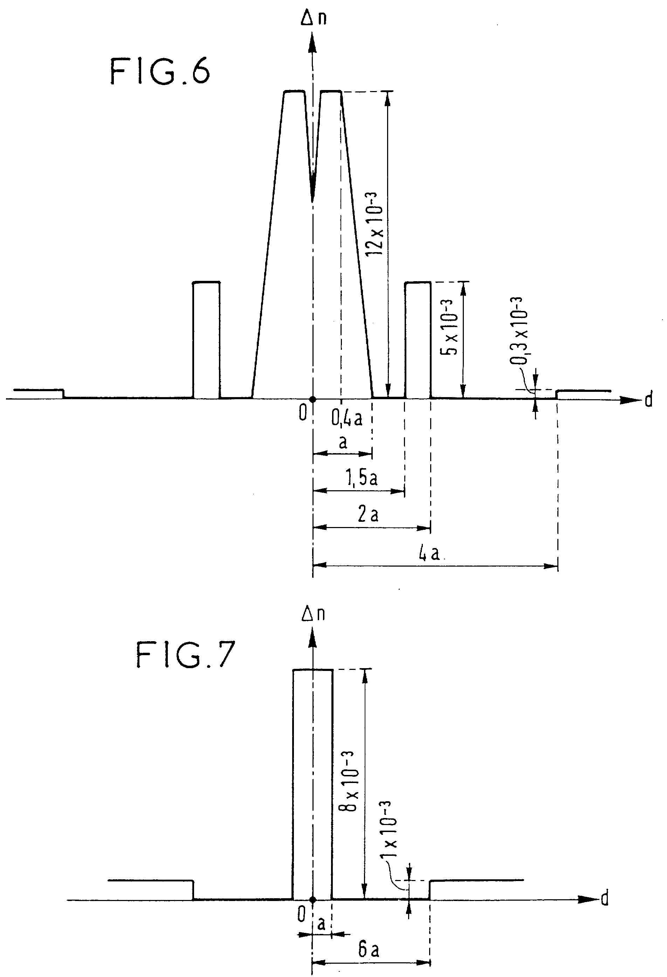

Plus généralement, en ce qui concerne le diamètre de champ de mode des fibres d'un câble selon l'invention, il est compris entre 7 et 9 µm vers 1550 nm, et la longueur d'onde de coupure de chacune des fibres est inférieure ou égale à 1,35 µm, et de préférence voisine de 1,33 µm. Deux exemples non limitatifs de profils d'indice permettant d'obtenir cette caractéristique sont montrés aux figures 6 et 7, où la différence Δn entre les indices de réfraction des différentes parties de la fibre optique et celui de la gaine entourant immédiatement le coeur est donnée en fonction de la distance d à l'axe de la fibre, a étant le rayon du coeur de la fibre optique.

En référence à la figure 1, une fibre optique 1 mise en oeuvre dans un câble selon l'invention a été préalablement soumise, sur sa gaine optique de silice 2 qui entoure classiquement un coeur optique 3 de propagation, à un traitement 4, qui peut être constitué d'un traitement de surface par exemple à base d'oxyde de titane ou de l'adjonction d'une couche de revêtement par exemple de carbone, ce traitement étant destiné à augmenter la durée de vie de la fibre. Le revêtement ci-dessus est de très faible épaisseur, par exemple environ 0,5 µm.

Toutes les couches de silice éventuelles entourant le coeur optique sont dénommées "gaine optique" et portent globalement le numéro de référence 2, pour simplifier l'exposé. Toutefois, il est bien entendu que la gaine optique peut être complexe (notamment comme illustré aux figures 6 et 7) afin d'obtenir les propriétés souhaitées, et n'est pas nécessairement constituée d'une unique couche de silice autour du coeur optique.

Un revêtement plastique 5 est réalisé sur la fibre préalablement traitée. Ce revêtement a pour fonction de protéger le traitement 4 ; il permet en outre de contribuer à l'identification par codes de couleurs des différentes fibres au sein d'un câble. Cette identification est primordiale pour des câbles mis en oeuvre dans un réseau de distribution. Il peut être réalisé par enduction ou de préférence par extrusion pour disposer d'une plus grande possibilité de combinaisons de couleurs.

Les fibres ainsi traitées et revêtues sont ensuite assemblées, en référence aux figures 2 et 3.

Un premier mode d'assemblage bien connu dans le domaine des câbles électriques, est dit à couches concentriques et est représenté en figure 2. Dans ce mode d'assemblage, les fibres 1, 22 sont disposées en hélice (ou torsadées) au sein d'un câble 20 régulièrement en couches concentriques par exemple autour d'un élément de renfort mécanique 21 qui peut être réalisé en matériau de bourrage. Cet élément de renfort 21 peut être remplacé par une fibre optique.

Dans un autre mode d'assemblage selon l'invention, représenté en figure 3, les fibres sont agencées au sein d'un câble 30 en faisceaux 31, 32, 33, chaque faisceau étant lui-même agencé de diverses façons, par exemple en couches concentriques ou en long. Cet assemblage est protégé par une gaine extérieure 34 en matériau plastique.

On peut également envisager de remplacer les fibres optiques décrites ci-dessus par des fibres "multicoeurs" présentant les mêmes caractéristiques en termes de diamètre de champ de mode que la fibre optique 1 de la figure 1, mais constituant par exemple un quarte optique, en référence à la figure 4 qui illustre de façon simplifiée la structure d'une fibre 40 comprenant quatre coeurs 43, 45, 46, 47, un traitement 44 et un revêtement plastique 45.

Pour améliorer les qualités mécaniques du câble, les fibres ou faisceaux de fibres sont habituellement torsadés sur la longueur du câble, soit selon un mode d'assemblage hélicoïdal 52 en référence à la figure 5B illustrant un câble 55 comprenant des fibres 1 traitées selon l'invention, soit selon un mode d'assemblage de type dit SZ 51 en référence à la figure 5A illustrant un câble 50 comprenant des fibres 1 traitées selon l'invention.

Toutefois, toujours selon l'invention, les fibres optiques peuvent être assemblées en structure serrée ou non, et en long, éventuellement autour d'un élément de renfort central.

Après l'assemblage des fibres ainsi décrit, l'ensemble est protégé par une gaine extérieure en matériau plastique comme l'illustre la figure 3. Compte tenu des caractéristiques d'un tel câble (faible diamètre et légèreté rapportés au nombre de fibres) et puisque la majeure partie de la section droite est constituée de fibres résistant aux contraintes, il peut être inutile d'ajouter des renforts mécaniques, ce qui constitue un avantage supplémentaire du câble suivant l'invention.

Le revêtement plastique réalisé sur la fibre traitée, soit par extrusion, soit par enduction, doit avoir l'épaisseur la plus faible possible afin de minimiser l'encombrement et d'augmenter le nombre de fibres dans un câble de diamètre donné. Ce revêtement plastique présente une double fonction de protection du traitement réalisé sur la couche externe de silice de la fibre et d'identification par un code de couleurs approprié. Cette fonction d'identification est essentielle pour des câbles mis en oeuvre dans un réseau de distribution. La technique de revêtement par extrusion permet aisément de réaliser un marquage par codes de couleur du revêtement plastique. Il est à noter que la technique d'enduction au moyen d'une résine est moins adaptée pour la réalisation d'une identification par codes à couleurs multiples.

A titre d'exemple de réalisation, on peut donner les indications de dimensions suivantes :
- diamètre de la fibre 1 au-dessus de la gaine optique 2 : 125 µm ± 3 µm
- épaisseur du revêtement de carbone 4 : 0,5 µm
- épaisseur du revêtement plastique 5 de la fibre : de l'ordre de 200 µm,
- diamètre de champ de mode 2 Wₒ à 1550 nm : 7,5 µm ≦ 2 Wₒ ≦ 9 µm,
- longueur d'onde de coupure λ_{c} : 1200 nm ≦ λ_{c} ≦ 1280 nm (λ_{c} est toujours inférieure ou égale à 1350 nm)

Bien sûr, l'invention n'est pas limitée aux exemples qui viennent d'être décrits et de nombreux aménagements peuvent être apportés à ces exemples sans sortir du cadre de l'invention.

Ainsi, on peut imaginer un diamètre extérieur de fibre de silice voisin de 80 à 100 µm et différents types de traitement de la surface extérieure de la couche de silice.

De même, le nombre et l'assemblage des fibres au sein d'un câble peut être quelconque et dépendre notamment des conditions d'exploitation de ce câble.

## Revendications

1. Fibre optique comportant un coeur optique entouré d'une gaine optique, ladite gaine optique étant entourée d'un revêtement sensiblement hermétique, et comportant au-dessus dudit revêtement hermétique un revêtement en un matériau plastique (5) caractérisée en ce que les paramètres optogéométriques de ladite fibre optique sont sélectionnés de manière telle qu'il en résulte un diamètre de champ de mode compris entre 7 et 9 µm vers 1550 nm, et une longueur d'onde de coupure inférieure ou égale à 1,35 µm.

2. Fibre optique selon la revendication 1 caractérisée en ce que ledit revêtement sensiblement hermétique est recouvert d'un revêtement en un matériau plastique.

3. Fibre optique selon l'une des revendications 1 ou 2 caractérisée en ce que ledit revêtement sensiblement hermétique est constitué de carbone.

4. Fibre optique selon l'une des revendications 2 ou 3 caractérisée en ce que ledit revêtement en un matériau plastique est réalisé par enduction ou extrusion sur ladite fibre optique.

5. Fibre optique selon l'une des revendications 1 à 4 caractérisée en ce que ledit revêtement sensiblement hermétique a une épaisseur de l'ordre de 0,5µm.

6. Fibre optique selon l'une des revendications 1 à 5 caractérisée en ce que ledit revêtement en un matériau plastique a une épaisseur de l'ordre de 200 µm.

7. Fibre optique selon l'une des revendications 1 à 6 caractérisée en ce qu'elle a un diamètre de champ de mode compris entre 7,5 et 9 µm vers 1550 nm, et une longueur d'onde de coupure comprise entre 1,2 et 1,28 µm.

8. Câble à fibres optiques comprenant une pluralité de fibres optiques (1) selon la revendication 1,
ledit câble comportant en outre une gaine extérieure de protection (34) en un matériau plastique entourant lesdites fibres optiques (1), caractérisé en ce que lesdites fibres optiques sont assemblées dans ledit câble en étant torsadées entre elles ou autour d'un élément de renfort, ou disposées en long.

9. Câble selon la revendication 8, caractérisé en ce que ledit revêtement plastique (5) comprend des informations d'identification de chaque fibre.

10. Câble selon la revendication 9, caractérisé en ce que lesdites informations d'identification correspondent à un code de couleurs.

11. Câble selon l'une des revendications 8 à 10, caractérisé en ce que les fibres optiques sont assemblées en faisceaux (31, 32, 33).

12. Câble selon l'une des revendications 8 à 11, caractérisé en ce que les fibres optiques (1, 22, 23) sont assemblées en couches concentriques.

13. Câble selon l'une des revendications 8 à 12, caractérisé en ce que les fibres optiques (1) sont assemblées selon un pas hélicoïdal (52).

14. Câble selon l'une des revendications 8 à 12, caractérisé en ce que les fibres optiques (1) sont assemblées selon un pas d'assemblage de type SZ (51).

15. Câble selon l'une des revendications 8 à 14, caractérisé en ce que les fibres optiques (40) sont des fibres multicoeurs (41, 43, 46, 47).

16. Câble selon l'une des revendications 8 à 15, caractérisé en ce que ledit revêtement hermétique (4) de chaque fibre comprend un dépôt de carbone sur la gaine optique.

17. Câble selon l'une des revendications 8 à 15, caractérisé en ce que ledit revêtement hermétique (4) de chaque fibre comprend un dopage à base d'oxyde de titane de ladite gaine optique.

18. Procédé pour réaliser un câble à fibres optiques comprenant les étapes suivantes :
- réalisation de fibres optiques (1) dont les paramètres optogéométriques sont sélectionnés de manière telle qu'elles présentent un diamètre de champ de mode compris entre 7 et 9 µm vers 1550 nm et une longueur d'onde de coupure inférieure ou égale à 1,35 µm,
- traitement de chaque fibre pour rendre celle-ci sensiblement hermétique,
- réalisation d'un revêtement plastique mince (5) directement appliqué sur chaque fibre préalablement traitée,
- assemblage des fibres ainsi traitées et revêtues, en étant torsadées entre elles ou autour d'un élément de renfort, ou disposées en long
- gainage de l'ensemble.

## Patentansprüche

1. Optische Faser, die einen von einem optischen Mantel umgebenen optischen Kern aufweist, wobei der optische Mantel von einer im Wesentlichen hermetischen Beschichtung umgeben ist und über dieser hermetischen Beschichtung eine Beschichtung aus einem Kunststoff (5) aufweist, dadurch gekennzeichnet, dass die optogeometrischen Parameter der optischen Faser derart ausgewählt sind, dass daraus ein Durchmesser des Schwingungsmodusfeldes zwischen 7 und 9 µm bei 1550 nm und eine Grenzwellenlänge folgt, die kleiner oder gleich 1,35 µm ist.

2. Optische Faser nach Anspruch 1, dadurch gekennzeichnet, dass die im Wesentlichen hermetische Beschichtung von einer Beschichtung aus einem Kunststoff bedeckt ist.

3. Optische Faser nach einem der Ansprüche 1 oder 2, dadurch gekennzeichnet, dass die im Wesentlichen hermetische Beschichtung aus Kohlenstoff besteht.

4. Optische Faser nach einem der Ansprüche 2 oder 3, dadurch gekennzeichnet, dass die Beschichtung aus einem Kunststoff durch Auftragen oder Extrudieren auf die optische Faser ausgeführt ist.

5. Optische Faser nach einem der Ansprüche 1 bis 4, dadurch gekennzeichnet, dass die im Wesentlichen hermetische Beschichtung eine Dicke in der Größenordnung von 0,5 µm hat.

6. Optische Faser nach einem der Ansprüche 1 bis 5, dadurch gekennzeichnet, dass die Beschichtung aus einem Kunststoff eine Dicke in der Größenordnung von 200 µm hat.

7. Optische Faser nach einem der Ansprüche 1 bis 6, dadurch gekennzeichnet, dass sie einen Durchmesser des Schwingungsmodusfeldes zwischen 7,5 und 9 µm bei 1550 nm und eine Grenzwellenlänge zwischen 1,2 und 1,28 µm hat.

8. Kabel mit optischen Fasern, das eine Vielzahl von optischen Fasern (1) nach Anspruch 1 aufweist, wobei das Kabel außerdem einen äußeren Schutzmantel (34) aus einem Kunststoff aufweist, der die optischen Fasern (1) umgibt, dadurch gekennzeichnet, dass die optischen Fasern in dem Kabel zusammengesetzt sind, indem sie miteinander oder um ein Verstärkungselement herum verdrillt oder in der Länge angeordnet sind.

9. Kabel nach Anspruch 8, dadurch gekennzeichnet, dass die Kunststoffbeschichtung (5) Kennzeichnungsinformationen für jede Faser umfasst.

10. Kabel nach Anspruch 9, dadurch gekennzeichnet, dass die Kennzeichnungsinformationen einem Farbcode entsprechen.

11. Kabel nach einem der Ansprüche 8 bis 10, dadurch gekennzeichnet, dass die optischen Fasern in Bündeln (31, 32, 33) zusammengesetzt sind.

12. Kabel nach einem der Ansprüche 8 bis 11, dadurch gekennzeichnet, dass die optischen Fasern (1, 22, 23) in konzentrischen Schichten zusammengesetzt sind.

13. Kabel nach einem der Ansprüche 1 bis 12, dadurch gekennzeichnet, dass die optischen Fasern (1) entlang einer Steigung (52) zusammengesetzt sind.

14. Kabel nach einem der Ansprüche 8 bis 12, dadurch gekennzeichnet, dass die optischen Fasern (1) gemäß einem Aufbau vom SZ-Typ (51) zusammengesetzt sind.

15. Kabel nach einem der Ansprüche 8 bis 14, dadurch gekennzeichnet, dass die optischen Fasern (40) Fasern (41, 43, 46, 47) mit mehreren Kernen sind.

16. Kabel nach einem der Ansprüche 8 bis 15, dadurch gekennzeichnet, dass die hermetische Beschichtung (4) jeder Faser eine Kohlenstoffabscheidung auf dem optischen Mantel umfasst.

17. Kabel nach einem der Ansprüche 8 bis 15, dadurch gekennzeichnet, dass die hermetische Beschichtung (4) jeder Faser eine Dotierung des optischen Mantels auf Basis von Titandioxid umfasst.

18. Verfahren zur Herstellung eines Kabels mit optischen Fasern, das die folgenden Schritte umfasst:
- Herstellung von optischen Fasern (1), deren optogeometrische Parameter derart ausgewählt sind, dass sie einen Durchmesser des Schwingungsmodusfeldes zwischen 7 und 9 µm bei 1550 nm und eine Grenzwellenlänge aufweisen, die kleiner oder gleich 1,35 µm ist,
- Behandlung jeder Faser, um diese im Wesentlichen hermetisch zu machen,
- Ausführung einer dünnen Kunststoffbeschichtung (5), die direkt auf jede vorher behandelte Faser aufgebracht wird,
- Zusammensetzen der so behandelten und beschichteten Fasern, indem sie miteinander oder um ein Verstärkungselement herum verdrillt oder in der Länge angeordnet werden,
- Ummantelung des Aufbaus.

## Claims

1. An optical fiber including an optical core surrounded by optical cladding, said optical cladding being surrounded by a substantially hermetic coating, and including over said hermetic coating a coating of plastics material (5), said optical fiber being characterized in that the optical and geometrical parameters of said optical fiber are chosen to give a mode field diameter lying in the range 7 µm to 9 µm at around 1550 nm, and a cutoff wavelength that is less than or equal to 1.35 µm.

2. An optical fiber according to claim 1, characterized in that said substantially hermetic coating is covered by a plastics material.

3. An optical fiber according to claim 1 or 2, characterized in that said substantially hermetic coating is constituted by carbon.

4. An optical fiber according to claim 2 or 3, characterized in that said coating of plastics material is made by extrusion or by some other coating process on said optical fiber.

5. An optical fiber according to any one of claims 1 to 4, characterized in that said substantially hermetic coating has a thickness of about 0.5 µm.

6. An optical fiber according to any one of claims 1 to 5, characterized in that said coating of plastics material has a thickness of about 200 µm.

7. An optical fiber according to any one of claims 1 to 6, characterized in that it has a mode field diameter lying in the range 7.5 µm to 9 µm at around 1550 nm, and a cutoff wavelength lying in the range 1.2 µm to 1.28 µm.

8. An optical fiber cable comprising a plurality of optical fibers (1) according to claim 1, said cable further including an outer protective sheath (34) of plastics material surrounding said optical fibers (1), the cable being characterized in that said optical fibers are assembled together in said cable by being twisted around one another or around a reinforcing element, or by being disposed lengthwise.

9. A cable according to claim 8, characterized in that said plastics coating (5) includes identification information for identifying each fiber.

10. A cable according to claim 9, characterized in that said identification information corresponds to a color code.

11. A cable according to any one of claims 8 to 10, characterized in that the optical fibers are assembled together in bundles (31, 32, 33).

12. A cable according to any one of claims 8 to 11, characterized in that the optical fibers (1, 22, 23) are assembled together in concentric layers.

13. A cable according to any one of claims 8 to 12, characterized in that optical fibers (1) are assembled together in a helical pitch (52).

14. A cable according to any one of claims 8 to 12, characterized in that the optical fibers (1) are assembled together in an SZ type assembly pitch (51).

15. A cable according to any one of claims 8 to 14, characterized in that the optical fibers (40) are multi-core fibers (41, 43, 46, 47).

16. A cable according to any one of claims 8 to 15, characterized in that said hermetic coating (4) of each fiber comprises a deposit of carbon on the optical cladding.

17. A cable according to any one of claims 8 to 15, characterized in that said hermetic coating (4) of each fiber comprises titanium oxide based doping of said optical cladding.

18. A method of making an optical fiber cable comprising the following steps:
· making optical fibers (1) having optical and geometrical parameters that are chosen so that they have a mode field diameter lying in the range 7 µm to 9 µm at around 1550 nm, and a cutoff wavelength that is less than or equal to 1.35 µm;
· treating each fiber to make it substantially hermetic;
· making a thin plastics coating (5) that is applied directly on each previously-treated fiber;
· assembling the fibers that have been treated and coated in this way by twisting them around one another or around a reinforcing element, or by disposing them lengthwise; and
· applying a sheath to the assembly.
